# FASCICULE DE BREVET EUROPEEN

(11) **EP 0 800 770 B1**
(45) Date de publication et mention de la délivrance du brevet: **25.07.2001**
(21) Numéro de dépôt: 96200986.6
(22) Date de dépôt: 12.04.1996
(51) Int. Cl.: A23G 1/00, A23G 1/20

(54) **Procédé de préparation de chocolat et analogues**
Verfahren zur Herstellung von Schokolade und ähnliche Erzeugnisse
Process for preparing chocolate and similar products

(43) Date de publication de la demande: 15.10.1997
(73) Titulaire: SOCIETE DES PRODUITS NESTLE S.A., 1800 Vevey (CH)
(72) Inventeur: Ducret, Pierre, CH / 1113 ST.SAPHORIN S/MORGES (CH); Holz, Katrin, 1012 Lausanne (CH); Wang, Junkuan, 1010 Lausanne (CH); Wille, Hans-Juergen, 1844 Villeneuve (CH)
(74) Mandataire: Archambault, Jean

(56) Documents cités:
- EP-A- 0 401 427
- EP-A- 0 427 544
- WO-A-93/06737
- CH-A- 662 041
- GB-A- 1 538 750
- GB-A- 2 270 828
- US-A- 1 628 251

## Description

L'invention a trait à la préparation de chocolat et analogues avec incorporation d'eau.

Le chocolat est composé d'une phase grasse, de beurre de cacao et le cas échéant de graisse lactique, contenant essentiellement des composés solides, par exemple des fibres de cellulose, des cristaux de sucre et des protéines dispersés. Dans la préparation du chocolat, la poudre de cacao finement moulue ou raffinée est transformée en une suspension fluide de sucre, de cacao et le cas échéant de poudre de lait dans la phase grasse par l'opération de conchage. La teneur en eau d'un chocolat est approximativement 1 % en poids avant le conchage et < 1 % après cette opération qui produit une évaporation de l'eau.

Il y a un intérêt considérable dans le domaine de la confiserie/chocolaterie à augmenter la thermorésistance du chocolat et à réduire son contenu calorique. On a proposé différents moyens pour atteindre ces résultats.

Une voie a consisté à l'incorporation directe d'eau ou d'humectants, par exemple de glycérol. Ce mode d'incorporation induit une augmentation considérable et rapide de la viscosité, due au fait que ces composés réagissent avec le sucre qui est dispersé dans la phase lipidique du chocolat pour former des agglomérats. Le chocolat ainsi transformé est pratiquement impossible à manipuler et présente une sensation en bouche grossière et sableuse. Même une élimination consécutive de l'eau ne modifie pas cette texture dégradée.

D'autres voies ont consisté à ajouter des substances hydratées, des mousses, sirops, gels ou émulsions, eau dans l'huile ou huile dans l'eau. Un exemple d'une telle approche est constitué par le procédé décrit dans US-A-5160760, selon lequel on prépare une émulsion d'une solution d'hydrate de carbone et d'une graisse en présence d'un émulsifiant, puis on mélange l'émulsion avec une masse tempérée de chocolat.

GB-A-1538750 concerne un procédé de préparation d'une composition de chocolat contenant de l'eau qui se présente sous forme d'une phase aqueuse solidifiée amorphe de sucre plutôt que d'une phase grasse continue. Le procédé consiste à mélanger de l'eau, des solides de lait entier, du sucre, des solides non gras du cacao, du beurre de cacao et de la gélatine en présence d'un agent émulsifiant dans un mélangeur à grande vitesse de manière à former une émulsion, puis à évaporer l'eau de manière à éviter la séparation de la graisse et à solidifier la phase aqueuse en une pâte qui est ensuite formée (extrudée) à chaud. Il en résulte une dispersion des particules de beurre de cacao, constituant une phase grasse discontinue dans la phase aqueuse qui, après avoir été formée, se solidifie en refroidissant par l'action de la gélatine.

WO-A-93/06737 décrit entre autres la préparation d'une composition à base de chocolat thermorésistante qui consiste à mélanger une pâte de chocolat fondu et tempéré avec une crème de fructane tel que l'inuline, la dite crème ayant été préparée sous fort cisaillement dans un mélangeur rapide. On verse ensuite la pâte obtenue dans des moules.

CH-A-662041 se rapporte à un procédé de préparation de chocolat thermorésistant, dans lequel l'eau est incorporée directement dans le chocolat à une température inférieure à 35° C, ce qui limite l'hydratation aux sucres tout en évitant l'hydratation des autres substances non grasses telles que les protéines et l'amidon. La phase grasse continue est maintenue. On peut ainsi ajouter directement jusqu'à 2 % d'eau additionnée de lécithine par pulvérisation, à du chocolat fondu contenant du lactose ajouté. Le mélange est versé dans des moules à 29-36° C et refroidi. Les blocs de chocolat sont ensuite maturés à 29° C sous forte humidité relative de manière à compléter l'hydratation des sucres.

GB-A-2270828 décrit l'introduction sous pression de chocolat solide dans un extrudeur comprenant une zone de convergence et un ajutage de sortie dans des conditions telles que le chocolat est plastifié mais n'est pas liquéfié et qu'il est déformable pendant un certain temps après sa sortie de l'appareil. Il n'est pas envisagé d'incorporer de l'eau dans le chocolat.

EP-A-427544 concerne un procédé de préparation de chocolat contenant de l'eau comme composition d'enrobage, consistant à mélanger une masse de chocolat conchée fluide chauffée avec un ingrédient aqueux en présence d'une pâte de noix additionnée de lécithine et de polyglycérol ricinoléate ou d'un sucroester pour émulsifier le mélange en une émulsion huile dans l'eau. Le problème de l'incorporation d'eau dans le chocolat a été résolu selon l'invention, en contournant la difficulté créée par l'augmentation de viscosité.

L'invention concerne donc un procédé de préparation de chocolat et analogues, caractérisé par le fait que l'on introduit séparément une masse de chocolat ou d'analogue au chocolat et une composition contenant de l'eau sous forme d'une émulsion ou d'une dispersion d'une substance épaississante ou gélifiante dans l'eau, dans un extrudeur, dans lequel on malaxe le mélange sous une température contrôlée, puis que l'on fait passer le mélange à travers un ajutage, de sorte que la masse de chocolat sortante soit à une température de 0 à 28 ° C.

Dans le contexte de l'invention, on entend par "analogue au chocolat" un produit de confiserie dont la composition est voisine de celle du chocolat du fait que tout ou partie du beurre de cacao est remplacé par une graisse d'origine végétale ou un mélange de graisses d'origine végétale d'usage courant en confiserie et dont les propriétés physico-chimiques sont analogues ou équivalentes à celles du beurre de cacao. Ainsi, dans la suite de l'exposé, le terme chocolat sera employé pour désigner le chocolat et ses analogues.

Une composition contenant de l'eau peut être, dans le contexte de l'invention une émulsion eau dans l'huile ou, de préférence une dispersion d'une substance épaississante ou gélifiante dans l'eau. On peut utiliser comme gélifiant, par exemple, un carraghénate, un gellane, une gomme, la gélatine ou la cellulose microcristalline. On préfère utiliser la cellulose microcristalline par ce qu'elle est non calorique et qu'elle procure une sensation en bouche améliorée. Une telle composition peut contenir un polyol, par exemple le glycérol, si l'on veut améliorer la stabilité microbiologique du chocolat. Elle peut avantageusement contenir des substances hydrosolubles, par exemple des arômes, des agents de préservation, des substances actives, des oligoéléments et/ou des vitamines.

On prépare avantageusement un gel aqueux en dispersant la quantité désirée de cellulose microcristalline, représentant 5 à 20 % en poids et de préférence 5 à 8 % en poids de la composition, dans l'eau, au moyen d'un mélangeur rapide. Le cas échéant, on ajoute des sels de préservation, par exemple le benzoate de sodium et le sorbate de potassium à la composition aqueuse préalablement à l'addition du gélifiant. On ajoute enfin les autres composants hydrosolubles après que le gélifiant ait été convenablement dispersé. On peut y ajouter, par exemple du glycérol pour réduire l'activité de l'eau, par exemple à raison d'environ 10 % en poids de la composition aqueuse. On peut également y ajouter un émulsifiant, par exemple de la lécithine, un ester d'acide gras et de polyglycérol ou un mélange de tels émulsifiants de manière à améliorer la distribution de la composition aqueuse dans la masse de chocolat et à assurer ainsi une meilleure stabilité microbiologique du produit final.

En variante, on peut utiliser une émulsion comme composition contenant de l'eau, par exemple une crème ou un lait concentré sucré ou non.

Par le biais de l'incorporation d'eau, on peut préparer des chocolats fonctionnels à valeur nutritionnelle, par exemple en y incorporant du calcium, par exemple sous forme de lactate de calcium et de la vitamine, par exemple de la vitamine C.

Pour mettre en oeuvre l'extrusion, on peut utiliser un extrudeur mono-vis ou bi-vis avec fourreau à double enveloppe muni de moyens de refoidissement. On préfère un extrudeur bi-vis qui réalise un meilleur malaxage des composants. Les vis peuvent être composées de segments successifs où leur forme varie d'un segment à l'autre, par exemple du point de vue de l'orientation des filets et de leur pas. La configuration des vis est de préférence adaptée pour maximiser le mélange et le pompage de la masse vers l'ajutage de sortie tout en limitant le cisaillement. On peut prévoir des zônes intermédiaires de brassage, par exemple par des disques mono- ou bilobes à orientation positive, ayant un effet de transport ou négative, ayant un effet de retour ou encore un segment à pas de vis inverse induisant un retour. Les vis peuvent être contra-rotatives ou de préférence co-rotatives. La vitesse de rotation des vis est de 50 à 500 t/min. et de préférence 250 à 400 t/min. Le fourreau et le cas échéant la ou les vis sont munis de moyens de refroidissement constitués d'une double enveloppe avec, préférablement, un circuit de refroidissement autonome par segment, avec soupapes de contrôle du débit d'agent frigorigène et le cas échéant un circuit de refroidissement de la ou des vis, ce qui permet une régulation modulée en température. L'ajutage de sortie peut avoir une configuration variée et un élément de coupe peut être prévu à la sortie de l'extrudeur, par exemple permettant le formage de la masse de chocolat, par exemple en bouchées, barres ou tablettes.

On peut introduire dans l'extrudeur du chocolat grossièrement moulu ou sous forme de poudre. Ce peut être du chocolat noir, du chocolat au lait ou encore du chocolat blanc, c'est à dire que la masse ne contient pas de solides non gras du cacao. De préférence, le chocolat a été préalablement tempéré. On introduit cette masse de manière contrôlée dans l'extrudeur, par exemple au moyen d'une trémie de distribution, munie par exemple d'une vis de gavage.

On peut introduire la composition contenant de l'eau, de préférence sous forme de gel on d'émulsion pompable, dans l'extrudeur, par exemple au moyen d'une pompe volumétrique. La température du fourreau est ajustée de manière que la masse sortant de l'appareil ait une température de 0 à 28° C et de préférence de 18 à 22° C.

Le chocolat sortant de l'extrudeur se présente sous forme d'une masse de grande plasticité, plutôt que sous forme d'un fluide visqueux, mais cette plasticité diminue avec le temps et, après environ 30 min. à quelques heures, le chocolat devient cassant. La durée de cette transformation physique dépend de la teneur en eau et des conditions d'extrusion. Ainsi le produit final a une consistance allant de dur à mou suivant qu'il contient de 3 à 20 % en poids d'eau.

On peut également introduire la masse de chocolat liquide et la composition contenant de l'eau séparément directement dans l'extrudeur, et dans ce cas, on préfère utiliser un extrudeur bi-vis pour sa meilleure capacité de mélange.

Le produit obtenu contient moins de calories, a un goût semblable et une meilleure résistance à la chaleur qu'un chocolat standard. Il peut servir de véhicule à des composants nutritionnels ou fonctionnels, par exemple des humectants ou des arômes, ou à des substances biologiquement actives. Il est de préférence utilisé comme fourrure ou centre, enrobé de chocolat tempéré, sans eau incorporée ou introduit dans une coque moulée de chocolat tempéré sans eau incorporée.

Les exemples ci-après, dans lesquels les pourcentages et parties sont pondéraux, sauf indication contraire, illustrent l'invention.

### Exemple 1

On prépare une composition aqueuse gélifiée en dispersant 6 % de cellulose microcristalline (Avicel RC-591 F (R)) dans 84 % d'eau sous agitation vigoureuse dans un mélangeur rapide et on y ajoute, une fois le gel formé, 10 % de glycérol. On introduit du chocolat en poudre (particules de dimensions < ou = à 1 mm), préalablement tempéré, par une trémie à distribution contrôlée dans un extrudeur bi-vis co-rotatives équipé d'un système de refroidissement, dans lequel on injecte la composition aqueuse gélifiée au moyen d'une pompe doseuse. A titre de comparaison, on réalise l'extrusion de la même poudre de chocolat seule. Les paramètres de l'extrusion ainsi que la texture de l'extrudat sont indiqués dans le tableau 1 ci-après. Le chocolat obtenu est plus crémeux et moins amer que le chocolat servant de référence.

**Tableau 1**

| **Chocolat (%)** | **Gel (%)** | **Débit de chocolat (kg/h)** | **Débit de gel (kg/h)** | **Vitesse de rotation des vis (t/min.)** | **Température de sortie de l'extrudat (° C)** | **Texture de l'extrudat** |
|---|---|---|---|---|---|---|
| 80 | 20 | 8 | 2 | 400 | 19 | mou, maintenant sa forme |
| 85 | 15 | 8,5 | 1,5 | 400 | 20 | assez mou |
| 90 | 10 | 13,5 | 1,5 | 400 | 20 | légèrement mou |
| 93 | 7 | 10 | 0,75 | 300 | 21 | solide |
| 95 | 5 | 9,5 | 0,5 | 250 | 25 | solide |

| Comparaison | | | | | | |
|---|---|---|---|---|---|---|
| 100 | 0 | 7 | 0 | 400 | 9 | solide |

### Exemple 2

On procède comme à l'exemple 1, sauf que l'on ajoute au gel 0,05 % de benzoate de sodium et 0,05 % de sorbate de potassium comme préservatifs. Les caractéristiques physiques des produits obtenus sont semblables à celles des chocolats préparés selon l'exemple 1.

### Exemple 3

On procède comme à l'exemple 2, mis à part le fait que l'on ajoute au gel 5 % de lactate de calcium, ce qui correspond à 1 % de lactate de calcium (0,13 % de calcium) incorporé dans le chocolat. Ce niveau de lactate de calcium n'a pas eu d'influence sur les qualités organoleptiques du chocolat. La composition du gel est la suivante: eau 79,8 %, cellulose microcristalline 5,7 %, glycérol 9,5 %, benzoate de sodium 0,05 %, sorbate de potassium 0,05 %, lactate de calcium 0,5 %. Les conditions de l'extrusion et les compostions des produits sont indiquées dans le tableau 2 ci-après.

**Tableau 2**

| **Chocolat (%)** | **Gel (%)** | **Débit de chocolat (kg/h)** | **Débit de gel (kg/h)** | **Vitesse de rotation des vis (t/min.)** | **Température de sortie de l'extrudat (° C)** | **Teneur en calcium du chocolat (%)** |
|---|---|---|---|---|---|---|
| 80 | 20 | 8 | 2 | 350 | 20 | 0,13 |
| 85 | 15 | 8,5 | 1,5 | 400 | 21 | 0,1 |
| 90 | 10 | 9 | 1 | 350 | 21 | 0,06 |

### Exemple 4

On procède comme à l'exemple 2, sauf que l'on ajoute 0,35 % d'acide ascorbique au gel, ce qui correspond à 52,5 mg de vitamine C dans 100 g de chocolat avec 15 % de gel dans le chocolat. Le gel a ainsi la composition suivante: eau 83,55 %, cellulose microcristalline 6 %, glycérol 10 %, benzoate de sodium 0,05 %, sorbate de potassium 0,05 %, acide ascorbique 0,35 %. Les conditions de l'extrusion et les compostions des produits sont indiquées dans le tableau 3 ci-après.

**Tableau 3**

| **Chocolat (%)** | **Gel (%)** | **Débit de chocolat (kg/h)** | **Débit de gel (kg/h)** | **Vitesse de rotation des vis (t/min.)** | **Température de sortie de l'extrudat (° C)** | **Teneur en vitamine C du chocolat (mg/100g)** |
|---|---|---|---|---|---|---|
| 85 | 15 | 5,7 | 1 | 400 | 21 | 52,5 |
| 90 | 10 | 7,2 | 0,8 | 300 | 20 | 35 |

### Exemple 5

On procède comme à l'exemple 2, sauf que l'on ajoute 2 % de lécithine au gel. Pour ce faire, on disperse d'abord l'émulsifiant dans le glycérol, puis on mélange la dispersion au gel. Le gel a ainsi la composition suivante: eau 82,2 %, cellulose microcristalline 5,9 %, glycérol 9,8 %, benzoate de sodium 0,05 %, sorbate de potassium 0,05 %, lécithine 2 %. Le chocolat obtenu présente une surface lisse et une texture légèrement collante. Les conditions de l'extrusion et les compostions des produits sont indiquées dans le tableau 4 ci-après.

**Tableau 4**

| **Chocolat (%)** | **Gel (%)** | **Débit de chocolat (kg/h)** | **Débit de gel (kg/h)** | **Vitesse de rotation des vis (t/min.)** | **Température de sortie de l'extrudat (° C)** | **Texture de l'extrudat** |
|---|---|---|---|---|---|---|
| 85 | 15 | 5,7 | 1 | 400 | 19 | mou, surface lisse |

En procédant comme ci-dessus, mais en utilisant 2 % d'esters de polyglycérol et d'acides gras (Sunsoft 818 SX (R), Taiyo Kagaku Co. Ltd, Japon) au lieu de lécithine à titre d'émulsifiant, on obtient un chocolat ayant les mêmes caractéristiques que celles indiquées au tableau 4 ci-dessus.

## Revendications

1. Procédé de préparation de chocolat et analogue au chocolat dont la composition est voisine de celle du chocolat du fait que tout ou partie du beurre de cacao est remplacé par une graisse végétale dont les propriétés physico-chimiques sont analogues ou équivalentes à celles du beurre de cacao, caractérisé par le fait que l'on introduit séparément une masse de chocolat ou d'analogue au chocolat et une composition contenant de l'eau sous forme d'une émulsion ou d'une dispersion d'une substance épaississante ou gélifiante dans l'eau, dans un extrudeur, dans lequel on malaxe le mélange sous une température contrôlée, puis que l'on fait passer le mélange à travers un ajutage, de sorte que la masse de chocolat sortante soit à une température de 0 à 28 ° C.

2. Procédé selon la revendication 1, caractérisé par le fait que la substance gélifiante est la cellulose microcristalline.

3. Procédé selon la revendication 1, caractérisé par le fait que la composition contenant de l'eau comprend un polyol, notamment le glycérol.

4. Procédé selon la revendication 1, caractérisé par le fait que la composition contenant de l'eau contient des substances hydrosolubles, notamment des arômes, des agents de préservation, des substances actives, des oligoéléments et/ou des vitamines.

5. Procédé selon la revendication 1, caractérisé par le fait que la masse de chocolat ou d'analogue au chocolat est tempérée préalablement à son introduction dans l'extrudeur.

6. Procédé selon la revendication 1, caractérisé par le fait qu'on utilise un extrudeur bi-vis avec fourreau à double enveloppe muni de moyens de refoidissement.

7. Procédé selon la revendication 6, caractérisé par le fait que le refroidissement du fourreau est ajusté de manière que la masse sortant de l'appareil ait une température de 0 à 28° C et notamment de 18 à 22° C.

8. Procédé selon la revendication 6, caractérisé par le fait que le chocolat sortant de l'extrudeur contient 3 à 20 % en poids d'eau, que sa consistance va de dur à mou suivant l'augmentation de sa teneur en eau, qu'il se présente sous forme d'une masse de grande plasticité, que cette plasticité diminue avec le temps et qu'après environ 30 min. à quelques heures, le chocolat devient cassant.

## Patentansprüche

1. Verfahren zur Herstellung von Schokolade oder einem schokoladeähnlichen Produkt, dessen Zusammensetzung der von Schokolade dadurch nahekommt, daß die gesamte Kakaobutter oder ein Teil davon durch ein Pflanzenfett ersetzt ist, dessen physikalisch-chemischen Eigenschaften denen von Kakaobutter ähnlich oder gleichwertig sind, dadurch gekennzeichnet, daß man eine Schokolademasse oder eine Masse aus einem schokoladeähnlichen Produkt und eine Wasser enthaltende Zusammensetzung in Form einer Emulsion oder einer Dispersion einer verdickenden oder gelbildenden Substanz in Wasser getrennt in einen Extruder einführt, in dem man die Mischung unter einer gesteuerten Temperatur knetet, und dann die Mischung durch eine Düse treten läßt, so daß die austretende Schokolademasse eine Temperatur von 0 bis 28°C hat.

2. Verfahren nach Anspruch 1, dadurch gekennzeichnet, daß die gelbildende Substanz mikrokristalline Cellulose ist.

3. Verfahren nach Anspruch 1, dadurch gekennzeichnet, daß die Wasser enthaltende Zusammensetzung ein Polyol, insbesondere Glycerin, enthält.

4. Verfahren nach Anspruch 1, dadurch gekennzeichnet, daß die Wasser enthaltende Zusammensetzung wasserlösliche Substanzen, insbesondere Aromen, Konservierungsmittel, Wirkstoffe, Spurenelemente und/oder Vitamine, enthält.

5. Verfahren nach Anspruch 1, dadurch gekennzeichnet, daß die Schokolademasse oder die Masse aus schokoladeähnlichem Produkt vor ihrer Einführung in den Extruder temperiert wird.

6. Verfahren nach Anspruch 1, dadurch gekennzeichnet, daß man eine Zweischneckenextruder mit einem doppelwandigen Mantel mit Kühlmitteln verwendet.

7. Verfahren nach Anspruch 6, dadurch gekennzeichnet, daß die Kühlung des Mantels so eingestellt wird, daß die aus der Vorrichtung austretende Masse eine Temperatur von 0 bis 28°C, insbesondere 18 bis 22°C, hat.

8. Verfahren nach Anspruch 6, dadurch gekennzeichnet, daß die aus dem Extruder austretende Schokolade 3 bis 20 Gew.-% Wasser enthält, daß ihre Konsistenz je nach der Erhöhung des Wassergehalts von hart bis weich geht, daß sie in Form einer Masser hoher Plastizität vorliegt, daß diese Plastizität mit der Zeit abnimmt und daß die Schokolade nach etwa 30 min bis einigen Stunden brechbar wird.

## Claims

1. Process for preparing chocolate and a product similar to chocolate of which the composition is close to that of chocolate on account of the fact that all or part of the cocoa butter is replaced by a vegetable fat of which the physico-chemical properties are similar or equivalent to those of cocoa butter, characterized in that a mass of chocolate or of a product similar to chocolate and a composition containing water in the form of an emulsion or of a dispersion of a thickening or gelling substance in water, are introduced separately into an extruder in which the mixture is blended at a controlled temperature, and the mixture is then passed through a nozzle, so that the mass of chocolate leaving is at a temperature of 0 to 28°C.

2. Process according to claim 1, characterized in that the gelling substance is microcristalline cellulose.

3. Process according to claim 1, characterized in that the composition containing water includes a polyol, in particular glycerol.

4. Process according to claim 1, characterized in that the composition containing water contains water-soluble substances, in particular flavours, preserving agents, active substances, trace elements and/or vitamins.

5. Process according to claim 1, characterized in that the mass of chocolate or of a product similar to chocolate is tempered prior to its introduction into the extruder.

6. Process according to claim 1, characterized in that a twin-screw extruder is used with a barrel having a double envelope provided with means of cooling.

7. Process according to claim 6, characterized in that the cooling of the barrel is adjusted so that the mass leaving the apparatus has a temperature of 0 to 28°C and in particular 18 to 22°C.

8. Process according to claim 6, characterized in that the chocolate leaving the extruder contains 3 to 20 % by weight of water, that its consistency ranges from hard to soft according to the increase in its water content, that it is in the form of a mass of high plasticity, that this plasticity becomes less with time and that after approximately 30 min to several hours, the chocolate becomes brittle.
